# EUROPÄISCHE PATENTSCHRIFT

(11) **EP 1 886 905 B1**
(45) Veröffentlichungstag und Bekanntmachung des Hinweises auf die Patenterteilung: **17.03.2010**
(21) Anmeldenummer: 06016446.4
(22) Anmeldetag: 07.08.2006
(51) Int. Cl.: B62D 59/04, B60W 30/06

(54) **Rangiervorrichtung für Anhänger mit eigenem Hilfsantrieb**
Manoeuvring device for trailer with its own auxiliary drive
Dispositif de manoeuvre pour remorque comprenant son propre entraînement auxiliaire

(43) Veröffentlichungstag der Anmeldung: 13.02.2008
(73) Patentinhaber: Truma Gerätetechnik GmbH & Co. KG, 85640 Putzbrunn (DE)
(72) Erfinder: Brandtner, Josef, 82110 Germering (DE); Bryer, Keith Nigel, Pelsall Wallsall West Midlands WS3 4EX (GB)
(74) Vertreter: Müller - Hoffmann & Partner

(56) Entgegenhaltungen:
- EP-A2- 1 225 090
- EP-A2- 1 679 251
- WO-A-2004/000617
- DE-A1- 4 413 694
- JP-A- 2006 069 534
- US-A- 3 826 324

## Beschreibung

Die Erfindung betrifft eine Rangiervorrichtung zum Rangieren eines ersten Objektes relativ zu einem zweiten Objekt, insbesondere für einen Fahrzeuganhänger, der mit einem fernlenkbaren Hilfs-Fahrantrieb ausgestattet ist.

Anhänger werden üblicherweise von Zugmaschinen gezogen. So ist es bekannt, dass ein PKW einen Wohnwagen ziehen kann. Wenn der Anhänger von der Zugmaschine abgenommen ist, wird er üblicherweise von Hand in die endgültige Position geschoben. Jedoch werden heutzutage zunehmend Wohnwagen angeboten, die aufgrund ihrer Größe und ihres Gewichts nur noch unter Mühen von Hand verschoben werden können. Daher wurden Hilfsantriebe entwickelt, die es ermöglichen, auch ohne Zugmaschine einen Anhänger mit Motorunterstützung zu verschieben bzw. zu drehen.

Aus der EP 0 827 898 A1 ist ein Hilfsantrieb für einen Anhänger bekannt, bei dem jedem Rad des Anhängers ein Antriebsmotor zugeordnet ist, der über eine gegen das Rad des Anhängers verschwenkbare Antriebswalze das Rad drehend antreibt. Mit Hilfe einer Fernbedienung kann der Anhänger auf diese Weise vorwärts und rückwärts verfahren werden. Da über die Fernbedienung auch die jeweiligen Antriebsmotoren separat ansteuerbar sind, sind auch Lenkbewegungen möglich. Auf diese Weise kann ein Anhänger in bequemer Weise auch dann verfahren werden, wenn keine Zugmaschine vorgespannt ist.

Andere Hilfsantriebe sind aus der EP 1 203 713 A2, EP 1 447 312 A1 und DE 202 13 534 U1 bekannt.

Zur Steuerung der Hilfsantriebe muss sich der Bediener gut konzentrieren, um Fehlbedienungen zu vermeiden. Wenn der Bediener entgegen der Haupt-Fahrtrichtung des Anhängers steht, muss er seine Steuerbefehle in die Fernbedienung um 180° verdreht eingeben, um die gewünschte Fahrbewegung des Anhängers zu erreichen. Dies erfordert ein gewisses räumliches Vorstellungsvermögen und einige Übung vom Bediener. Besonders sorgfältig muss der Bediener seine Steuerbefehle eingeben, wenn er den Anhänger in die Nähe der Zugmaschine bewegen will und dabei die Anhängerdeichsel z.B. über einen Kupplungshaken der Zugmaschine manövrieren möchte. Ein ungeübter Bediener kann hierfür einige Zeit benötigen und bei einer Kollision sogar Schäden an dem Anhänger oder der Zugmaschine verursachen.

Aus der DE 44 13 694 C2 und DE 43 03 815 A1 sind Ankuppelhilfsvorrichtungen bekannt, bei denen mit Hilfe von Ultraschallsensoren eine exakte Lage- bzw. Positionsbestimmung zwischen einem Anhänger, der keinen eigenen Fahrantrieb aufweist, und einer Zugmaschine möglich ist.

In der EP 1 679 251 A2 wird ein Anhänger mit einem Hilfs-Fahrantrieb beschrieben, der mit Hilfe einer Fernbedienungseinheit steuerbar ist. Mit Hilfe des Hilfs-Fahrantriebs kann der Anhänger in Abhängigkeit von den über die Fernbedienungseinheit gegebenen Steuerkommandos beliebig rangiert werden.

Der Erfindung liegt die Aufgabe zugrunde, eine Rangiervorrichtung für einen mit einem eigenen Hilfs-Fahrantrieb ausgestatteten Anhänger anzugeben, mit der der Anhänger in bequemer Weise verfahren und gelenkt werden kann. Erfindungsgemäß wird die Aufgabe durch eine Rangiervorrichtung gemäß den Patentansprüchen 1 oder 2 gelöst. Vorteilhafte Ausgestaltungen der Erfindung sind in den abhängigen Ansprüchen definiert.

Mit Hilfe der Rangiervorrichtung ist es somit möglich, dass das erste Objekt, z.B. ein Fahrzeuganhänger, mit Hilfe des Hilfs-Fahrantriebs stets so bewegt wird, dass es versucht, die vorgegebene Soll-Relativposition zu dem zweiten Objekt, z.B. einer Fernbedienung oder einer Zugmaschine, zu erreichen. So kann der Bediener z.B. vor dem Verfahren des Anhängers per Knopfdruck die zu dem Zeitpunkt aktuelle Relativposition zwischen Anhänger und Fernbedienung als Soll-Relativposition in der Rangiervorrichtung speichern. Bei nachfolgender Bewegung der Fernbedienung folgt der Anhänger - angetrieben durch den Hilfs-Fahrantrieb - automatisch, ohne dass der Bediener aufwendige Steuerbefehle eingeben muss. Sobald der Bediener die Fernbedienung still hält, bleibt auch der Anhänger stehen, sobald er die Soll-Relativposition erreicht hat. Der Anhänger folgt somit präzise der Bewegung der Fernbedienung, als wenn zwischen der Fernbedienung und dem Anhänger eine "virtuelle Leine" gespannt wäre. Dementsprechend sind auch Lenkbewegungen auf den Anhänger zu übertragen, wenn die Fernbedienung geeignet bewegt wird.

Ebenso ist es möglich, wie später noch erläutert wird, eine definierte Relativposition zu einer Zugmaschine, z.B. einem Kraftfahrzeug, fest bzw. dauerhaft als Soll-Relativposition zu speichern. Bei entsprechender Aktivierung der Rangiervorrichtung wird der Anhänger dann immer wieder in genau diese vorgegebene Soll-Relativposition zu der Zugmaschine bewegt. Sofern sicher gestellt ist, dass in der vorgegebenen Soll-Relativposition die Deichsel des Anhängers über einem Kupplungshaken der Zugmaschine positioniert ist, kann der Anhänger sehr einfach an die Zugmaschine angehängt werden, ohne dass der Bediener aufwendige Rangiermaßnahmen ergreifen muss.

Die Ist-Relativposition kann bestimmt werden durch die Abstände wenigstens eines Referenzpunktes an einem der Objekte zu wenigstens zwei Referenzpunkten an dem anderen Objekt. Mit Hilfe der so gegebenen drei Referenzpunkte lässt sich eine Art Triangulations-Messung realisieren, mit deren Hilfe die Relativposition zwischen den beiden Objekten erfasst werden kann.

Die Positionserfassungsvorrichtung kann Sender und Empfänger für optische und/oder akustische Signale zum Erfassen der Abstände aufweisen. Mit Hilfe der Signale lassen sich die Abstände zwischen den Referenzpunkten und damit zwischen den beiden Objekten präzise bestimmen. Z.B. können Ultraschallsender, Ultraschallempfänger, Laserabstandsmessvorrichtungen oder aber auch Bilderkennungssysteme genutzt werden.

Bei einer Ausführungsform der Erfindung weist die Positionserfassungsvorrichtung auf: eine an dem zweiten Objekt vorgesehene Daten-Sendeeinrichtung zum Senden eines Datensignals, eine an dem ersten Objekt vorgesehene Daten-Empfangseinrichtung zum Empfangen des Datensignals, wenigstens eine an einem der Objekte vorgesehene Ultraschall-Sendeeinrichtung zum Senden eines Ultraschallsignals, wenigstens eine an dem anderen Objekt angeordnete Ultraschall-Empfangseinrichtung zum Empfangen des Ultraschallsignals, wobei die Anzahl der Ultraschall-Sendeeinrichtungen und der Ultraschall-Empfangseinrichtungen derart bemessen und deren Anordnung an den jeweiligen Objekten derart gestaltet ist, dass wenigstens zwei Ultraschallsignale auf unterschiedlichen Wegen von dem einen Objekt zum anderen Objekt übertragbar sind, sowie eine Messeinrichtung zum jeweiligen Messen eines die Ist-Relativposition repräsentierenden Ist-Werts für die Laufzeit des Ultraschallsignals von der Ultraschall-Sendeeinrichtung an dem einen Objekt zu der Ultraschall-Empfangseinrichtung an dem anderen Objekt oder einer entsprechenden Entfernung zwischen der Ultraschall-Sendeeinrichtung und der Ultraschall-Empfangseinrichtung. Dabei kann die Speichereinrichtung ausgebildet sein zum Speichern von jeweiligen, die Soll-Relativposition repräsentierenden Soll-Werten für Ultraschallsignal-Laufzeiten oder entsprechenden Entfernungen zwischen der Ultraschall-Sendeeinrichtung und den Ultraschall-Empfangseinrichtungen. Die Steuereinrichtung kann ausgebildet sein zum Ansteuern des Hilfs-Fahrantriebs und damit Bewegen des ersten Objekts derart, dass eine Abweichung zwischen den Ist-Werten und den Soll-Werten verringert wird.

Bei dieser Ausführungsform ist somit eine Datenstrecke zum Übertragen des Datensignals vorgesehen, über die z.B. Steuerinformationen übermittelt werden. Weiterhin sind drei Ultraschalleinheiten, d.h. Ultraschallsender oder -empfänger an den beiden Objekten derart verteilt angeordnet, dass zwischen den beiden Objekten über zwei unterschiedliche Wege Ultraschallsignale übertragbar sind. Aufgrund der unterschiedlichen Laufzeiten der beiden Ultraschallsignale lässt sich zum einen der Abstand und zum anderen die Lage zwischen den beiden Objekten bestimmen. Die Laufzeitwerte der beiden Ultraschallsignale bzw. die beiden entsprechenden Entfernungen, die von den beiden Ultraschallsignalen überbrückt werden müssen, stellen die Ist-Werte dar, die mit den vorgegebenen Soll-Werten verglichen werden müssen. Die Steuereinrichtung bewirkt ein Bewegen des ersten Objekts derart, dass die Ist-Werte den Soll-Werten so gut wie möglich angenähert werden. Mit Hilfe der Ultraschallstrecken ist eine zuverlässige Entfernungsbestimmung möglich.

Wenn an dem anderen Objekt nur eine Ultraschall-Empfangseinrichtung angeordnet ist, sollen wenigstens zwei Ultraschall-Sendeeinrichtungen räumlich mit Abstand voneinander an dem einen Objekt angeordnet sein, so dass insgesamt drei Ultraschalleinheiten vorhanden sind. Die eine Ultraschall-Empfangseinrichtung empfängt dann die Signale der beiden Ultraschall-Sendeeinrichtungen, wobei es zweckmäßig ist, wenn die Ultraschallsignale nach einem vorgegebenen Schema zeitversetzt empfangen werden, da ein gleichzeitiger Empfang zusätzliche Differenzierungsmaßnahmen erfordert, um die beiden Ultraschallsignale auseinander zu halten und für jedes der Ultraschallsignale die jeweilige Laufzeit bestimmen zu können.

Wenn hingegen an dem einen Objekt nur eine Ultraschall-Sendeeinrichtung angeordnet ist, sind an dem anderen Objekt wenigstens zwei Ultraschall-Empfangseinrichtungen räumlich mit Abstand voneinander anzuordnen. In diesem Fall kann das Ultraschallsignal der einen Ultraschall-Sendeeinrichtung durch die beiden Ultraschall-Empfangseinrichtungen simultan empfangen werden. Aufgrund der unterschiedlichen Laufzeiten des Ultraschallsignals zu den beiden Ultraschall-Empfangseinrichtungen lassen sich die gewünschten Ist-Werte ermitteln.

Der Beginn der Messung der Laufzeiten der Ultraschallsignale kann durch das Senden oder Empfangen des Datensignals ausgelöst werden. Insbesondere dann, wenn das Datensignal nicht per Ultraschall sondern per Funk oder Infrarot zu dem ersten Objekt übertragen wird, ist es geeignet, die Messung der Laufzeiten zu triggern. Da die Ultraschallsignale sich lediglich mit Schallgeschwindigkeit fortbewegen, während das Datensignal mit Lichtgeschwindigkeit übertragen wird, lassen sich die Laufzeiten der Ultraschallsignale sehr präzise bestimmen, so dass die Abstände zwischen den Objekten mit hoher Genauigkeit ermittelt werden können.

Es kann eine Bedienungseinrichtung vorgesehen sein, durch die die Daten-Sendeeinrichtung und die Ultraschall-Sendeeinrichtung derart angesteuert werden, dass das Datensignal und das Ultraschall-Signal im Wesentlichen gleichzeitig erzeugt werden. In diesem Fall muss folglich das Ultraschallsignal nicht durch das Datensignal getriggert werden.

Es kann ein Justierungs-Schaltelement vorgesehen sein, zum Auslösen eines Justierungs-Vorgangs, in dem eine aktuelle Relativposition zwischen dem ersten und dem zweiten Objekt als künftige Soll-Relativposition definierbar ist. Dies erfolgt durch Erfassen der Ist-Relativposition des ersten Objekts in der oben beschriebenen Weise sowie durch Speichern der so erfassten Ist-Relativposition als Soll-Relativposition in der Speichereinrichtung. Durch Betätigen des Justierungs-Schaltelements kann der Bediener somit beliebig eine Relativposition vorgeben, die nachfolgend auch dann beibehalten werden soll, wenn er das zweite Objekt (z.B. die Bedienungseinrichtung) bewegt. Dementsprechend ist es sinnvoll, wenn das Justierungs-Schaltelement an der Bedienungseinrichtung angeordnet ist. Der Anhänger folgt dann stets der Bewegung der Bedienungseinrichtung.

Zum Erfassen der Ist-Relativposition sind die jeweiligen Laufzeiten der Ultraschallsignale durch die Messeinrichtung messbar. Danach sind die so erfassten Laufzeiten und/oder die entsprechenden Entfernungen als Soll-Werte in der Speichereinrichtung zum Speichern der Ist-Relativposition speicherbar.

Es kann ein Aktivierungs-Schaltelement vorgesehen sein, durch das die Steuereinrichtung aktivierbar ist, um durch Bewegen des ersten Objekts die Ist-Werte den Soll-Werten anzunähern. Das Aktivierungs-Schaltelement dient somit dazu, die oben beschriebene "virtuelle Leine" zwischen den beiden Objekten zu "spannen", um die von der Rangiervorrichtung ermöglichte Kopplung der Bewegungen der beiden Objekte zu realisieren. Das erste Objekt wird bei Betätigung des Aktivierungs-Schaltelements von der Steuereinrichtung stets so bewegt, dass es die vorgegebene Soll-Relativposition im Verhältnis zu dem zweiten Objekt erreicht.

Bei einem Nicht-Betätigen des Aktivierungs-Schaltelements kann die Steuereinrichtung ein Stoppen des Hilfs-Fahrantriebs bewirken, um eine unerwünschte Fahrbewegung zu vermeiden. Es steht dem Bediener dann frei, weitere, z.B. an der Bedienungseinrichtung vorgesehene Schaltelemente zu betätigen, um den Hilfs-Fahrantrieb manuell anzusteuern und auf diese Weise den Anhänger ohne Unterstützung der Steuereinrichtung frei zu bewegen. In diesem Fall ist die Bewegung des ersten Objekts nicht an das zweite Objekt gekoppelt. Die erforderlichen Steuerinformationen können über das Datensignal zu dem Anhänger übertragen werden.

Die Bedienungseinrichtung kann eine getrennt von dem ersten Objekt tragbare Fernbedienungseinheit sein, mit der das Datensignal per Infrarot, Funk oder Kabel zu dem ersten Objekt übertragen werden kann.

An dem ersten Objekt kann eine Daten-Sendeeinrichtung zum Senden eines Rückmeldungs-Datensignals vorgesehen sein, während an dem zweiten Objekt eine entsprechende Daten-Empfangseinrichtung zum Empfangen des Rückmeldungs-Datensignals vorgesehen sein kann. Auf diese Weise können Datensignale nicht nur in einer Richtung von dem zweiten Objekt zum ersten Objekt sondern auch in umgekehrter Richtung gesendet werden. Dies kann vorteilhaft sein, um Informationen über Betriebszustände des ersten Objekts (Anhänger) zu dem zweiten Objekt (Fernbedienung) zu übermitteln.

Zweckmäßigerweise kann an dem zweiten Objekt eine Anzeige vorgesehen sein, zum Anzeigen einer in dem Rückmeldungs-Datensignal enthaltenen Information. Später werden weitere vorteilhafte Nutzungen einer derartigen Daten-Rückmeldung erläutert.

An dem Anhänger können auch mehr als zwei Ultraschall-Empfangseinrichtungen oder -Sendeeinrichtungen derart verteilt angeordnet sein, dass von jeder Betrachtungsposition um den Anhänger herum immer wenigstens zwei Ultraschall-Empfangseinrichtungen bzw. -Sendeeinrichtungen sichtbar sind. Auf diese Weise ist es möglich, dass der Bediener einen beliebigen Standort um den Anhänger herum einnehmen kann, um die Rangiervorrichtung zu nutzen. Da jeweils wenigstens zwei Ultraschalleinheiten (Empfangseinrichtungen oder Sendeeinrichtungen) von seinem Standort aus sichtbar sind, können entsprechend auch die geforderten Ultraschallsignale über zwei unterschiedliche Wege übermittelt werden, um die gewünschte Messung durchführen zu können. Zu diesem Zweck müssen also um die Außenseite des Anhängers herum mehrere Ultraschalleinheiten, z.B. vier oder fünf positioniert werden.

Durch die Steuereinrichtung kann ein Stillsetzen des Hilfs-Fahrantriebs bewirkt werden, wenn nur eine Ultraschall-Empfangseinrichtung nur ein Ultraschallsignal empfängt, also überhaupt nur ein Ultraschallsignal zwischen den beiden Objekten ausgetauscht wird. In diesem Fall ist eine Bestimmung der Relativposition nicht mehr mit ausreichender Sicherheit möglich, so dass zur Vermeidung gefährlicher Fahrzustände das erste Objekt nicht bewegt werden sollte. Erst dann, wenn wieder die geforderten zwei Ultraschallsignale auf unterschiedlichen Wegen übertragen werden, kann die Steuereinrichtung den Hilfs-Fahrantrieb wieder aktivieren.

Es kann zweckmäßig sein, dass an einer Deichselspitze des Anhängers eine weitere Ultraschall-Empfangseinrichtung oder -Sendeeinrichtung angeordnet ist. Auf diese Weise stellt die Deichselspitze einen Referenzpunkt dar, der z.B. dann, wenn die Deichselspitze des Anhängers über einen Kupplungshaken bewegt werden soll, die Präzision der Rangiervorrichtung verbessern kann.

Wenn mehr als drei Ultraschalleinheiten an den beiden Objekten angeordnet sind, kann die Messeinrichtung derart ausgestaltet sein, dass sie nur die Ultraschall-signal-Laufzeiten weiterverarbeitet, die von den beiden zu der Ultraschall-Sendeeinrichtung am nächsten oder alternativ am entferntesten positionierten Ultraschall-Empfangseinrichtungen erfasst wurden. Die weiteren Ultraschallsignale mit längeren Laufzeiten brauchen dann nicht berücksichtigt zu werden.

In der Steuereinrichtung können Steuerstrategien hinterlegt sein, um ein Bewegen des Anhängers zum Erreichen der Soll-Relativpositionen zu ermöglichen. So ist es z.B. denkbar, dass bei einer ungeeigneten Relativposition zwischen Fernbedienung und Anhänger ein direktes Verfolgen der Bewegung der Fernbedienung durch den Anhänger nicht möglich ist bzw. ungeeignete Fahrbewegungen bewirkt. Um derartige Zustände zu vermeiden, sollte die Steuereinrichtung geeignete Steuerstrategien verfolgen und z.B. eine Drehung des Anhängers auf der Stelle um die Hochachse oder das Fahren von Kurvenradien ermöglichen.

Der Hilfs-Fahrantrieb kann ein Fahrantrieb sein wie in der oben erläuterten EP 0 827 898 A1 beschrieben. Insbesondere kann der Hilfs-Fahrantrieb zwei Hilfs-Fahrantriebseinheiten aufweisen, die ein linkes und ein rechtes Rad des Anhängers antreiben. Dafür kann jede der Hilfs-Fahrantriebseinheiten eine Antriebsrolle aufweisen, die von einem eigenen Elektromotor drehend angetrieben und bei Bedarf gegen die Lauffläche des Anhängerrads gedrückt wird. Bei Nichtgebrauch kann die jeweilige Hilfs-Fahrantriebseinheit von dem Anhängerrad weggeschwenkt werden, wie aus dem Stand der Technik bekannt.

Der Hilfs-Fahrantrieb bzw. die beiden Hilfs-Fahrantriebseinheiten sind über eine eigene Steuereinrichtung mit Hilfe z.B. der Fernbedienung in bekannter Weise steuerbar. Die Steuereinrichtung der erfindungsgemäßen Rangiervorrichtung kann hier steuernd eingreifen, um die gewünschte Fahrbewegung des Anhängers zu erreichen.

Zu den Steuerstrategien kann wenigstens eine der folgenden Steuermaßnahmen gehören: Geradeausfahrt, Rückwärtsfahrt, Kurvenfahrt durch unterschiedliche Ansteuerung der linken und der rechten Hilfs-Fahrantriebseinheit, Drehung um die Hochachse. Weiterhin kann eine langsame Geradeaus- oder Rückwärtsfahrt möglich sein, wenn die Abweichung der Ist-Relativposition von der Soll-Relativposition unter eine vordefinierte Grenze fällt. Das ist der Fall, wenn z.B. der Anhänger die Zielposition beinahe erreicht hat.

In der Steuereinrichtung kann eine untere und/oder eine obere Grenze für die Ist-Werte vorgegeben sein, wobei bei Unterschreiten der unteren Grenze und/oder bei Überschreiten der oberen Grenze die Steuereinrichtung ein Stillsetzen des Hilfs-Fahrantriebs und/oder eine optische und/oder akustische Warnung bewirkt.

Auf diese Weise ist einerseits eine Art Nahbereichsradar möglich: Wenn sich die beiden Objekte zu stark annähern, besteht die Gefahr einer Kollision, so dass es sinnvoll ist, die entsprechenden Maßnahmen zu ergreifen. Andererseits sollte sicher gestellt sein, dass sich der Bediener mit der Fernbedienung nicht zu weit von dem Anhänger entfernen kann, um noch seine Steuermaßnahmen überwachen zu können. Wenn er sich jedoch über das zulässige Maß hinaus von dem Anhänger entfernt, so dass die Entfernung zwischen den beiden Objekten zu groß wird, ist eine kontrollierte Bewegung des Anhängers nicht mehr gewährleistet. Auch dann ist ein Stoppen des Hilfs-Fahrantriebs sinnvoll. Dabei kann es zweckmäßig sein, den Bediener mit einer akustischen oder optischen Warnung an der Fernbedienung darauf hinzuweisen, dass die Entfernung zu groß geworden ist.

Die Fernbedienungseinheit kann eine Signal-Empfangseinrichtung aufweisen, wobei bei Unterschreiten eines vorgegebenen Erkennungs-Grenzwerts durch die Ist-Werte von denjenigen Ultraschallsignalen, die durch wenigstens zwei der Ultraschall-Empfangseinrichtungen empfangen worden sind, ein Erkennungs-Signal an die Signal-Empfangseinrichtung der Fernbedienungseinheit abgebbar ist und an der Fernbedienungseinheit eine Anzeige vorgesehen ist, zum Anzeigen eines Vorliegens des Erkennungssignals. Damit ist es möglich, dass der Fernbedienungseinheit eine Information zugeführt wird, dass sich der Anhänger nahe genug zu der Fernbedienungseinheit befindet und bereit ist, Steuerbefehle zu empfangen. Nur dann, wenn das Erkennungs-Signal vorliegt, kann der Anhänger verfahren werden.

Wenigstens einem Teil der Ultraschall-Empfangseinrichtungen kann jeweils eine zusätzliche eigene Ultraschall-Sendeeinrichtung zugeordnet sein, zum Erzeugen eines Näherungs-Ultraschallsignals, das sich hinsichtlich seiner Eigenschaften von dem Ultraschallsignal der an dem einen Objekt vorgesehenen Ultraschall-Sendeeinrichtung unterscheidet. Es kann weiterhin eine Näherungseinrichtung vorgesehen sein, zum Messen einer Laufzeit des von der eigenen Ultraschall-Sendeeinrichtung gesendeten, von einem Gegenstand in der Umgebung reflektierten und von der jeweiligen Ultraschall-Empfangseinrichtung empfangenen Näherungs-Ultraschallsignals, zum Bestimmen einer Ist-Entfernung zwischen der jeweiligen Ultraschall-Empfangseinrichtung und dem Gegenstand, und zum Ausgeben eines Warnsignals, wenn die Ist-Entfernung einen vorgegebenen Grenzwert unterschreitet.

Auf diese Weise wird eine Art "Annäherungs-Radar" realisiert, wie es z.B. von Kraftfahrzeugen bekannt ist. Wenn sich das erste Objekt beim Verfahren zu nah einem Hindernis (Gegenstand in der Umgebung) annähert, wird dies durch das von der zusätzlichen eigenen Ultraschall-Sendeeinrichtung gesendeten und der zugehörigen Ultraschall-Empfangseinrichtung nach Reflexion an dem Hindernis wieder empfangenen Ultraschallsignal erkannt. Die eigene Ultraschall-Sendeeinrichtung kann mit der zugehörigen Ultraschall-Empfangseinrichtung zu einem Ultraschallsensor zusammengefasst werden, wie er z.B. bei Kraftfahrzeugen häufig in Stoßfängern integriert wird. Beim Rangieren des Anhängers lassen sich auf diese Weise Hindernisse erkennen, die unter Umständen vom Bediener nicht gesehen werden.

Das Warnsignal kann an die Steuereinrichtung geführt werden, um den Hilfs-Fahrantrieb zu stoppen. Auf diese Weise lässt sich eine Kollision des Anhängers mit dem Hindernis verhindern.

Es ist möglich, dass sich das Warnsignal in Abhängigkeit von einer Änderung der Ist-Entfernung ändert. Auf diese Weise wird eine Information darüber erhalten, wie nah sich der Anhänger dem Hindernis angenähert hat bzw. wie sich die Entfernung zum Hindernis bei einer weiteren Bewegung des Anhängers ändert. Dementsprechend sollte das Warnsignal optisch und/oder akustisch darstellbar sein, um dem Bediener die entsprechende Information übermitteln zu können.

Das Warnsignal kann - z.B. mit Hilfe des oben angegebenen Rückmeldungs-Datensignals - an die Fernbedienungseinheit übertragen werden, an der eine Anzeige vorgesehen sein kann, um das Warnsignal optisch und/oder akustisch anzuzeigen. Der Bediener erhält so bequem die Information über die möglicherweise gefährliche Annäherung an ein für ihn unter Umständen nicht sichtbares Hindernis. Dabei ist es auch möglich, dass der Bediener die Fernbedienungseinheit z.B. am Armaturenbrett seines Kraftfahrzeugs befestigt hat und mit dem Anhänger rückwärts fährt. Da die Näherungseinrichtung auch dann in Betrieb ist, wenn die Steuerungseinrichtung der erfindungsgemäßen Rangiervorrichtung nicht genutzt wird, hat der Bediener die Möglichkeit, Annäherungen an Hindernisse zu erkennen. So ist es z.B. möglich, dass das Warnsignal auf der Anzeige der Fernbedienungseinheit in Form von Leuchtelementen dargestellt wird, die bei zunehmender Annäherung an das Hindernis zunehmend aktiviert werden.

Die zusätzlichen eigenen Ultraschall-Sendeeinrichtungen können auf allen Seiten des Anhängers angeordnet werden, um entsprechend Schutz an allen Seiten zu bieten.

Besonders zweckmäßig kann es sein, wenn die Ultraschallsensoren je nach räumlicher Konstellation unterschiedliche Aufgaben wahrnehmen. Z.B. können jeweils die beiden Sensoren bzw. Ultraschall-Empfangseinrichtungen zum Empfangen des Ultraschallsignals von der Fernbedienungseinheit genutzt werden, die der Fernbedienungseinheit und damit dem Bediener am nächsten angeordnet sind. Die restlichen Ultraschall-Empfangseinrichtungen können - sofern sie jeweils mit einer eigenen Ultraschall-Sendeeinrichtung ausgestattet sind - dann als "Annäherungs-Radar" genutzt werden, um den Bediener über Hindernisse zu informieren.

Sofern der Bediener mit der Fernbedienungseinheit seine Position relativ zu dem Anhänger ändert, kann es sein, dass andere Ultraschall-Empfangseinrichtungen besser geeignet sind, um das Ultraschallsignal von der Fernbedienungseinheit zu empfangen, als die gerade aktiven Empfangseinrichtungen. Dann findet automatisch ein Funktionswechsel zwischen den Ultraschall-Empfangseinrichtungen statt. Die Ultraschall-Empfangseinrichtungen, die nun nicht mehr zum Empfangen des Ultraschallsignals genutzt werden, können automatisch in den "Annäherungs-Radar"-Modus umgeschaltet werden. So ist sichergestellt, dass insbesondere die Seite des Anhängers, die vom Bediener abgewandt ist, durch das Annäherungs-Radar überwacht wird.

Die insbesondere in dem Justierungs-Vorgang definierten Soll-Werte werden in der Speichereinrichtung dauerhaft gespeichert, also auch über ein Ausschalten des Systems und über größere Zeiträume hinaus. Dabei ist es auch möglich, dass die Soll-Werte vom Bediener nur noch mit einem gewissen Aufwand geändert werden können, um ein versehentliches Ändern zu vermeiden. Die Festlegung der Soll-Werte entspricht dann eher einem Kalibrierungsprozess, der vom Bediener nicht jedes Mal erneut durchgeführt werden muss. Diese Möglichkeit ist insbesondere für die nachfolgende Ausführungsform von Interesse.

Bei dieser Ausführungsform ist das erste Objekt ein Anhänger und das zweite Objekt ein Zugfahrzeug, z.B. ein Kraftfahrzeug. Die Daten-Empfangseinrichtung und die Ultraschall-Sendeeinrichtung sind an dem Anhänger angeordnet, während die Daten-Sendeeinrichtung und wenigstens zwei der Ultraschall-Empfangseinrichtungen an dem Zugfahrzeug angeordnet sind. Dabei kann an dem Zugfahrzeug ein Anhängerkupplungs-Haken vorgesehen sein, wobei die beiden Ultraschall-Empfangseinrichtungen auf Höhe des Anhänger-Kupplungshakens derart angeordnet sind, dass sie diesen horizontal zwischen sich einschließen.

In diesem Fall kann als Soll-Position diejenige Position in die Speichereinrichtung eingespeichert werden, die der Anhänger einnimmt, wenn sich seine Deichselspitze über dem Anhängerkupplungs-Haken befindet. Beim Ankuppeln des Anhängers muss der Bediener das Fahrzeug in die Nähe des Anhängers fahren und daraufhin nur noch z.B. das Aktivierungs-Schaltelement an der Fernbedienung betätigen. Daraufhin steuert die Steuereinrichtung den Hilfs-Fahrantrieb derart an, dass die Deichselspitze die vorgegebene Soll-Relativposition erreicht, also über dem Kupplungshaken zum Stehen kommt. Der Bediener muss dann nur noch die Deichsel mit dem Kupplungshaken verbinden.

Da bei dieser Ausführungsform die Sende- und Empfangseinrichtungen unterschiedlich auf den Objekten verteilt sind, kann es zweckmäßig sein, dass durch das Empfangen des Datensignals durch die Daten-Empfangseinrichtung das Senden eines Ultraschallsignals durch die bei der Daten-Empfangseinrichtung angeordnete Ultraschall-Sendeeinrichtung bewirkt wird. Das Ultraschallsignal wird dann wieder zurück zu dem Objekt geschickt, von dem aus ursprünglich das Datensignal gesendet wurde.

Es kann vorteilhaft sein, wenn wenigstens eine der Einrichtungen Daten-Sendeeinrichtung, Daten-Empfangseinrichtung, Ultraschall-Sendeeinrichtung und Ultraschall-Empfangseinrichtung lösbar, insbesondere magnetisch oder durch Saugwirkung, an dem jeweils zugeordneten Objekt befestigt ist. Auf diese Weise kann die Rangiervorrichtung oder Teile davon bei Nichtgebrauch von den beiden Objekten entfernt und an einem geschützten Platz gelagert werden. Dieses ist insbesondere dann interessant, wenn der Anhänger ein Wohnwagen ist, der für längere Zeit an der gleichen Stelle stehen soll, ohne bewegt zu werden.

Dieser und weitere Vorteile und Merkmale der Erfindung werden nachfolgend anhand von Beispielen unter Zuhilfenahme der begleitenden Figuren näher erläutert. Es zeigen:
- **Fig. 1**: in schematischer Draufsicht einen mit der erfindungsgemäßen Rangiervorrichtung ausgestatteten Anhänger mit Fernbedienung;
- **Fig. 2**: eine zweite Ausführungsform der Erfindung;
- **Fig. 3**: in schematischer Draufsicht die Anordnung im Bereich einer Kupplungsstelle zwischen einem Fahrzeug und einer Anhängerdeichsel bei einer dritten Ausführungsform der Erfindung;
- **Fig. 4**: die Bewegung eines Anhängers bei automatischer Steuerung durch die erfindungsgemäße Rangiervorrichtung.

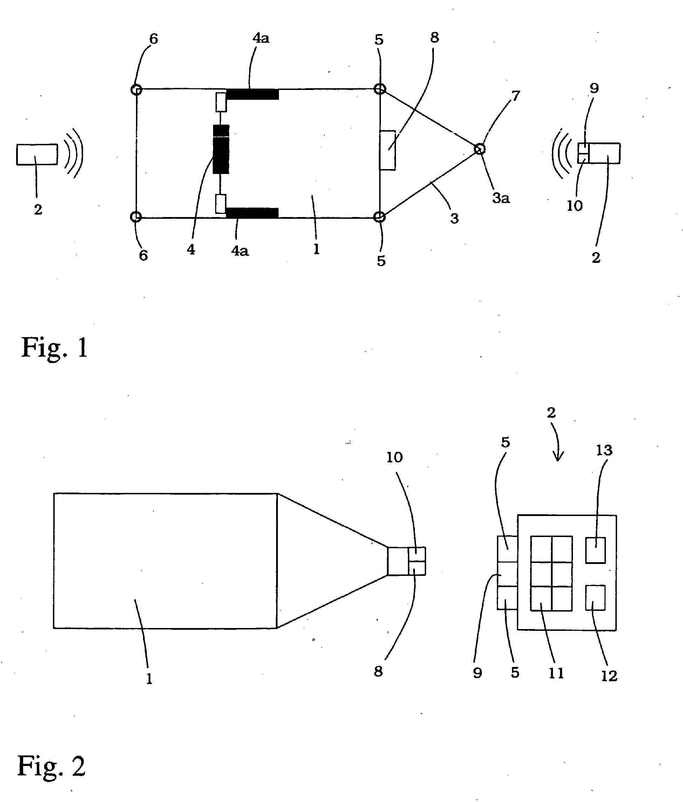

Fig. 1 zeigt in schematischer Draufsicht einen z.B. einen Wohnwagen darstellenden Anhänger 1. Der Anhänger 1 entspricht einem ersten Objekt.

Weiterhin ist eine als zweites Objekt dienende Fernbedienung 2 gezeigt, die wahlweise in beliebiger Relativstellung zu dem Anhänger 1 positioniert und von einem Bediener gehalten werden kann, so dass Datensignale von der Fernbedienung 2 (z.B. Ultraschallwellen) in Richtung zu dem Anhänger 1 gelangen können. In Fig. 1 ist die Fernbedienung 2 einmal vor dem Anhänger 1 und einmal hinter dem Anhänger angeordnet, wobei die Vorderseite des Anhängers 1 anhand einer in Haupt-Fahrtrichtung angeordneten Deichsel 3 erkennbar ist, an der der Anhänger 1 durch eine nicht dargestellte Zugmaschine gezogen werden kann.

Der Anhänger 1 ist mit einem Hilfs-Fahrantrieb 4 ausgestattet, der die Räder 4a antreibt. Der Hilfs-Fahrantrieb 4 kann in bekannter Weise durch die Fernbedienung 2 angesteuert werden, die zu diesem Zweck sechs Tasten für die einzelnen Fahrtrichtungen (vorwärts, rückwärts, vorwärts Rechtsfahrt, vorwärts Linksfahrt, rückwärts Rechtsfahrt, rückwärts Linksfahrt) besitzt.

Der Anhänger 1 ist mit einer erfindungsgemäßen Rangiervorrichtung ausgestattet und weist zu diesem Zweck mehrere als Ultraschall-Empfangseinrichtungen dienende Ultraschallsensoren 5, 6, 7 auf. So sind an den vorderen Kanten des Anhängers 1 zwei Ultraschallsensoren 5 angeordnet, denen auf der Rückseite des Anhängers 1 Ultraschallsensoren 6 gegenüber stehen. Weiterhin ist ein Ultraschallsensor 7 auf einem Deichselkopf 3a der Deichsel 3 platziert.

Über einen als Daten-Sendeeinrichtung dienenden Sender 9 an der Fernbedienung 2 wird in bekannter Weise ein Funk- oder Infrarotsignal an eine als Empfänger 8 dienende Daten-Empfangseinrichtung gesendet (Datensignal). Dieses Datensignal enthält die notwendigen Steuerbefehle zum Ansteuern des Hilfs-Fahrantriebs 4 in bekannter Weise.

Weiterhin ist an der Fernbedienung 2 ein Ultraschallsender 10 vorgesehen, dessen Ultraschallsignal von den Ultraschallsensoren 5, 6, 7 empfangen werden kann. Dabei ist es wichtig, dass wenigstens zwei der Ultraschallsensoren 5, 6, 7 das Signal empfangen.

Vor dem Aktivieren des Systems muss vom Bediener ein "relativer Nullpunkt", d.h. die Relativposition zwischen der Fernbedienung 2 und dem Anhänger 1 definiert werden. Dies ist mit Hilfe eines an der Fernbedienung 2 vorhandenen, nicht dargestellten Justierungs-Schaltelements möglich. Bei dessen Betätigung wird die aktuelle Relativposition zwischen der Fernbedienung 2 und dem Anhänger 1 bestimmt und gespeichert.

Die Bestimmung der Relativposition erfolgt dadurch, dass bei Betätigen des Justierungs-Schaltelements gleichzeitig mit einem Datensignal von dem Sender 9 auch ein Ultraschallsignal von dem Ultraschallsender 10 abgegeben wird. Durch den Laufzeitunterschied zwischen dem Datensignal (Lichtgeschwindigkeit) und dem Ultraschallsignal (Schallgeschwindigkeit in Luft) kann die Entfernung zwischen der Fernbedienung 2 und dem Anhänger 1 berechnet werden. Diese Entfernung wird zunächst als aktuelle und für die Zukunft insbesondere für den folgenden Rangiervorgang z.B. bis zum Ausschalten gewünschte Relativposition gespeichert.

Betätigt der Bediener danach ein ebenfalls an der Fernbedienung vorgesehenes, nicht gezeigtes Aktivierungs-Schaltelement, wird erneut die Entfernung zwischen Fernbedienung 2 und Anhänger 1 ermittelt. Ist die Entfernung größer oder kleiner als der vorher eingestellte Soll-Wert, werden die den jeweiligen Rädern 4a zugeordneten Motoren des HIlfs-Fahrantriebs 4 entsprechend für Vorwärts- oder Rückwärtsfahrt aktiviert, bis der Anhänger 1 wieder die vorgewählte Soll-Relativposition (relativer Nullpunkt) erreicht hat. Wird die Fernbedienung 2 quer zur Fahrtrichtung bewegt und das Aktivierungs-Schaltelement betätigt, ergeben sich Laufzeitunterschiede für die Ultraschallsignale zwischen den beiden Ultraschallsensoren 5, da die Entfernungen zwischen den beiden Ultraschallsensoren 5 zu dem Ultraschallsender 10 unterschiedlich ist. Anhand dieser Information kann durch die Steuereinrichtung eine sinnvolle Kurvenfahrt berechnet und durch Ansteuern des Hilfs-Fahrantriebs 4 erreicht werden.

Damit das System nur diejenigen Signale verarbeitet, die zur Steuerung des Systems gedacht sind, ist es zweckmäßig, wenn das Datensignal und das Ultraschallsignal digital codiert werden.

Außer den beiden vorderen Ultraschallsensoren 5 können auf der Heckseite des Anhängers 1 weitere zwei Ultraschallsensoren 6 angeordnet sein, so dass der Anhänger 1 auch von der Rückseite aus rangiert werden kann, wie durch die in Fig. 1 links abgebildete Fernbedienung 2 gezeigt.

Der fünfte Ultraschallsensor 7 am Deichselkopf 3a ist dazu geeignet, die gesamte Fahrzeugkontur kontrollieren zu können.

Aus Sicherheitsgründen ist das Rangieren über die Fernbedienung 2 nur in einem definierten Abstandsbereich möglich. Bei Überschreiten des maximalen Abstands erhält der Bediener eine Information hierzu, und das System stoppt die Bewegung des Anhängers 1. Sofern gewünscht, kann das System vorher eine akustische oder optische Warnung an den Bediener abgeben.

Das System arbeitet auch nur in einem definierten Bereich für die Geschwindigkeit einer Abstandsänderung der Fernbedienung 2 zu den Ultraschallsensoren 5, 6, 7 (Relativgeschwindigkeit zwischen Fernbedienung 2 und Ultraschallsensoren 5, 6, 7). Sofern sich der Abstand der Fernbedienung 2 zu den Ultraschallsensoren 5, 6, 7 zu schnell ändert, kann ein Stoppen der Bewegung des Anhängers 1 durch das System bewirkt werden. Auf diese Weise soll eine zu plötzliche Bewegung des Anhängers 1, z.B. wegen eines unebenen Untergrunds, vermieden werden bzw. wenigstens kontrollierbar sein. Ebenso kann ausgeschlossen werden, dass in einem Fall, in dem z.B. die Fernbedienung versehentlich einen Abhang herunterrollt, eine Fehlsteuerung des Anhängers 1 erfolgt. Alternativ zu dem Stoppen des Anhängers 1 ist es auch möglich, seine Rangiergeschwindigkeit zu verringern. Jedenfalls dann, wenn sich der Abstand zu schnell ändert, sollte ein von der Fernbedienung 2 abgegebenes Signal ignoriert und der Anhänger in einem sicheren Zustand gehalten werden.

Das System stoppt auch bei Verlust des Signals an einem der Ultraschallsensoren 5, 6, 7. Es müssen immer wenigstens zwei Ultraschallsignale über zwei verschiedene Wege übertragen werden, also z.B. von dem einen Ultraschallsender 10 zu den beiden vorderen Ultraschallsensoren 5, 5 oder zu einem vorderen Ultraschallsensor 5 und einem hinteren Ultraschallsensor 6.

Die Sensoren 5, 6, 7 können darüber hinaus auch als Abstandssensoren eingesetzt werden, wie dies z.B. bei Einparkhilfen oder Annäherungs-Radareinrichtungen bei PKWs bekannt ist (z.B. Parktronic ®). Wenn die Sensoren 5, 6, 7 eine Annäherung an ein Hindernis feststellen, werden Informationen zurück an die Fernbedienung 2 geschickt, um den Bediener über die möglicherweise gefährliche Annäherung und eine drohende Kollision zu informieren. Diese Sensorauswertung kann auch dazu verwendet werden, dass beim Rückwartsrangieren des Anhängers 1 mit einem PKW die Annäherungs-Information über den Abstand zu Hindernissen an die Fernbedienung 2 geschickt wird, die vom Fahrer z.B. in einem Halter am Armaturenbrett des PKWs befestigt wurde.

Weiterhin kann das System eine Sicherheitsfunktion ("Rammschutzfunktion") aufweisen, bei der die Motoren des Hilfs-Fahrantriebs 4 gestoppt werden, wenn ein Mindestabstand zu umliegenden Objekten unterschritten wird. Das ist auch für den Sensor 7 auf der Deichselspitze möglich, wenn er sich einer Anhängerkupplung annähert. Auf diese Weise kann verhindert werden, dass der Anhänger 1 irrtümlicherweise mit seiner Deichsel 3 in den Kofferraum des PKWs navigiert wird.

Die Näherungssensoren können auch seitlich angeordnet werden, um die Rammschutzfunktion auch beim Drehen des Anhängers 1 zu gewährleisten.

Fig. 2 zeigt eine zweite Ausführungsform der Erfindung, wobei ähnliche Bauelemente mit gleichen Bezugszeichen wie bei der ersten Ausführungsform gekennzeichnet sind.

Bei der zweiten Ausführungsform sind im Gegensatz zu der ersten Ausführungsform die Ultraschallsender und -empfänger vertauscht. Der Ultraschallsender 10 befindet sich nun an dem Anhänger 1, während die Ultraschallsensoren 5 an der Fernbedienung 2 vorgesehen sind.

Durch Betätigen einer Taste an der Fernbedienung 2 gibt der Sender 9 ein Datensignal an den Empfänger 8. Daraufhin wird der Ultraschallsender 10 aktiviert und ein Ultraschallsignal getriggert, dass von dem Ultraschallsender 10 wieder zurück zur Fernbedienung 2 und damit zu den Sensoren 5 gelangt. Aufgrund der verstrichenen Zeit zwischen Aussenden des Datensignals durch den Sender 9 und Empfang der Ultraschallsignale durch die Ultraschallsensoren 5 lässt sich die Entfernung zwischen der Fernbedienung 2 und dem Ultraschallsender 10 und damit dem Anhänger 1 erkennen, so dass die oben erläuterten Maßnahmen ergriffen werden können.

Bei der in Fig. 2 gezeigten Ausführungsform sind der Empfänger 8 und der Ultraschallsender 10 auf Höhe des Deichselkopfes 3a angeordnet. Selbstverständlich können sie auch an anderen Stellen vorgesehen sein. Darüber hinaus können auch mehrere Ultraschallsender 10 am Umfang des Anhängers 1 verteilt sein.

Auf der Fernbedienung 2 sind mehrere Schaltelemente 11 zur manuellen Steuerung des Hilfs-Fahrantriebs in bekannter Weise vorgesehen. Weiterhin ist ein Justierungs-Schaltelement 12 und ein Aktivierungs-Schaltelement 13 vorgesehen, deren Funktion oben bereits erläutert wurde.

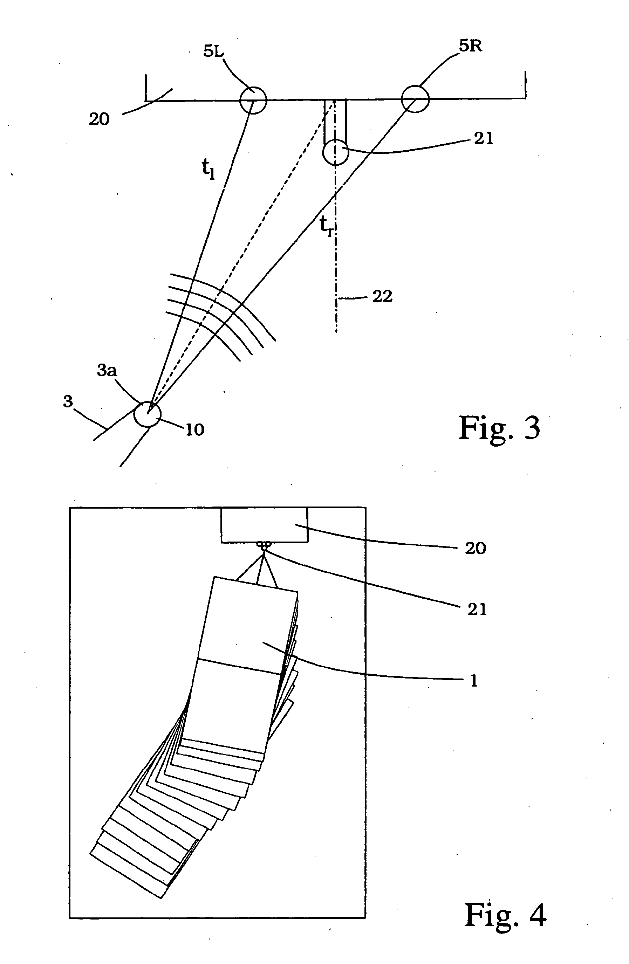

Fig. 3 zeigt eine Weiterentwicklung der Erfindung in schematischer Draufsicht, wobei die Deichsel 3 mit dem Deichselkopf 3a nur fragmentarisch gezeigt ist und der sich dahinter erstreckende Anhänger 1 überhaupt nicht abgebildet ist. Stattdessen ist die Rückseite eines Kraftfahrzeugs 20 erkennbar, von dem aus sich ein Kupplungshaken 21 erstreckt.

Auf dem Deichselkopf 3a ist ein Ultraschallsender 10 angeordnet. Links und rechts von dem Kupplungshaken 21 sind ein linker Ultraschallsensor 5L und rechter Ultraschallsensor 5R positioniert.

Nach Auslösen des Ultraschallsignals in der oben beschriebenen Weise gelangt das Ultraschallsignal von dem Ultraschallsender 10 zu den beiden Ultraschallsensoren 5L und 5R, wobei jeweils die Signallaufzeiten t₁ und tᵣ erforderlich sind.

Da im vorliegenden Fall die Strecke zwischen dem Ultraschallsender 10 und dem linken Ultraschallsensor 5L kürzer ist als die Strecke zu dem rechten Ultraschallsensor 5R, ist die Signallaufzeit t₁ kleiner als die Signallaufzeit tᵣ. Die Steuereinrichtung verlangsamt oder stoppt daraufhin den Antriebsmotor der rechten Hilfs-Fahrantriebseinheit 4, die das rechte Rad 4a des Anhängers 1 antreibt. Dementsprechend macht der Anhänger 1 eine Kurvenfahrt bzw. Drehung durch entgegengesetzte Bewegung der Räder nach rechts, so dass sich der Deichselkopf 3a einer Mittellinie 22 des Kraftfahrzeugs 20 annähert.

Wenn daraufhin nach einer gewissen Zeit der Deichselkopf 3a die Mittellinie 22 überfahren hat, so dass die linke Signallaufzeit t₁ größer wird als die rechte Signallaufzeit tᵣ, erfolgt ein umgekehrter Steuerbefehl, so dass der Anhänger 1 nach links gelenkt wird. Auf diese Weise nähert sich der Deichselkopf 3a immer mehr der Mittellinie 22 an. Wenn der Deichselkopf 3a und damit der Ultraschallsender 10 auf der Mittellinie 22 stehen, sind die Signallaufzeiten t₁ und tᵣ identisch, was durch die Steuerstrategie erreicht werden soll.

Sofern als Soll-Position für den Deichselkopf 3a eine Position über dem Kupplungshaken 21 vorgegeben wurde, fährt schließlich der Anhänger 1 immer weiter Richtung Kraftfahrzeug 20, bis sich tatsächlich der Deichselkopf 3a über dem Kupplungshaken 21 befindet. Dann stoppen die Motoren des Hilfs-Fahrantriebs 4.

Fig. 4 zeigt schematisch den Bewegungsablauf eines auf diese Weise automatisch zu dem Kupplungshaken 21 geführten Anhängers 1.

## Patentansprüche

1. Rangiervorrichtung zum Rangieren eines ersten Objektes (1) relativ zu einem zweiten Objekt (2), wobei das erste Objekt ein Anhänger (1) und das zweite Objekt eine getrennt von dem Anhänger tragbare Fernbedienungseinheit (2) ist, mit
- einer Positionserfassungsvorrichtung zum Erfassen einer Ist-Relativposition des ersten Objekts (1) zu dem zweiten Objekt (2);
- einer Speichereinrichtung zum Speichern einer Soll-Relativposition;
- einem an dem ersten Objekt (1) vorgesehenen Hilfs-Fahräntrieb (4) zum Rangieren des ersten Objekts (1); und mit
- einer Steuereinrichtung zum Ansteuern des Hilfs-Fahrantriebs (4) und damit Bewegen des ersten Objekts (1) derart, dass eine Abweichung zwischen der erfassten Ist-Relativposition und der Soll-Relativposition verringert wird.

2. Rarigiervorrichtung zum Rangieren eines ersten Objektes (1) relativ zu einem zweiten Objekt (2), wobei das erste Objekt ein Anhänger (1) und das zweite Objekt ein Zugfahrzeug (20) ist, mit
- einer Positionserfassungsvorrichtung zum Erfassen einer Ist-Relativposition des ersten Objekts (1) zu dem zweiten Objekt (2);
- einer Speichereinrichtung zum Speichern einer Soll-Relativposition;
- einem an dem ersten Objekt (1) vorgesehenen Hilfs-Fahrantrieb (4) zum Rangieren des ersten Objekts (1); und mit
- einer Steuereinrichtung zum Ansteuern des Hilfs-Fahrantriebs (4) und damit Bewegen des ersten Objekts (1) derart, dass eine Abweichung zwischen der erfassten Ist-Relativposition der Soll-Relativposition verringert wird;
- wobei die Soll-Relativposition in der Speichereinrichtung dauerhaft speicherbar ist.

3. Rangiervorrichtung nach Anspruch 1 oder 2, **dadurch gekennzeichnet, dass** die Ist-Relativposition bestimmt wird durch die Abstände wenigstens eines Referenzpunktes an einem der Objekte zu wenigstens zwei Referenzpunkten an dem anderen Objekt.

4. Rangiervorrichtung nach einem der Ansprüche 1 bis 3, **dadurch gekennzeichnet, dass** die Positionserfassungsvorrichtung Sender (9, 10) und Empfänger (5. 6, 7, 8) für optische und/oder akustische Signale zum Erfassen der Abstände aufweist.

5. Rangiervorrichtung nach einem der Ansprüche 1 bis 4, **dadurch gekennzeichnet, dass** die Positionserfassungsvorrichtung aufweist:
- eine an dem zweiten Objekt (2) vorgesehene Daten-Sendeeinrichtung (9) zum Senden eines Datensignals;
- eine an dem ersten Objekt (1) vorgesehene Daten-Empfangseinrichtung (8) zum Empfangen des Datensignals;
- wenigstens eine an einem der Objekte (1, 2) vorgesehene Ultraschall-Sendeeinrichtung (10) zum Senden eines Ultraschallsignals;
- wenigstens eine an dem anderen Objekt (2, 1) angeordnete Ultraschall-Empfangseinrichtung (5, 6, 7) zum Empfangen des Ultraschallsignals;
- wobei die Anzahl der Ultraschall-Sendeeinrichtungen (10) und der Ultraschall-Empfangseinrichtungen (5, 6, 7) derart bemessen und deren Anordnung an den jeweiligen Objekten derart gestaltet ist, dass wenigstens zwei Ultraschallsignale auf unterschiedlichen Wegen von dem einen Objekt (1, 2) zum anderen Objekt (2, 1) übertragbar sind; und
- eine Messeinrichtung zum jeweiligen Messen eines die Ist-Relativposition repräsentierenden Ist-Werts für die Laufzeit des Ultraschallsignals von der Ultraschall-Sendeeinrichtung (10) an dem einen Objekt (1, 2) zu der Ultraschall-Empfangseinrichtung (5, 6. 7) an dem anderen Objekt (2, 1) oder einer entsprechenden Entfernung zwischen der Ultraschall-Sendeeinrichtung (10) und der Ultraschall-Empfangseinrichtung (5, 6, 7); wobei
- die Speichereinrichtung ausgebildet ist zum Speichern von jeweiligen, die Soll-Relativposition repräsentierenden Soll-Werten für Ultraschallsignal-Laufzeiten oder entsprechenden Entfernungen zwischen der Ultraschall-Sendeeinrichtung (10) und den Ultraschall-Empfangseinrichtungen (5, 6, 7); und wobei
- die Steuereinrichtung ausgebildet ist zum Ansteuern des Hilfs-Fahrantriebs (4) und damit Bewegen des ersten Objekts (1) derart, dass eine Abweichung zwischen den Ist-Werten und den Soll-Werten verringert wird.

6. Rangiervorrichtung nach Anspruch 5, **dadurch gekennzeichnet, dass**
- wenn an dem anderen Objekt nur eine Ultraschall-Empfangseinrichtung (5) angeordnet ist, wenigstens zwei Ultraschall-Sendeeinrichtungen (10) räumlich mit Abstand voneinander an dem einen Objekt angeordnet sind; und dass
- die Ultraschallsignale der Ultraschall-Sendeeinrichtungen (10) durch die Ultraschall-Empfangseinrichturig (5) nach einem vorgegebenen Schema zeitversetzt empfangen werden.

7. Rangiervorrichtung nach Anspruch 5, **dadurch gekennzeichnet, dass**
- wenn an dem einen Objekt nur eine Ultraschall-Sendeeinrichtung (10) angeordnet ist, wenigstens zwei Ultraschall-Empfangseinrichtungen (5, 6, 7) räumlich mit Abstand voneinander an dem anderen Objekt angeordnet sind; und dass
- das Ultraschallsignal der Ultraschall-Sendeeinrichtung (10) durch die Ultraschall-Empfangseinrichtungen (5, 6, 7) simultan empfangen wird.

8. Rangiervorrichtung nach einem der Ansprüche 5 bis 7, **dadurch gekennzeichnet, dass** der Beginn der Messung der Laufzeiten der Ultraschallsignale durch das Senden oder Empfangen des Datensignals ausgelöst wird.

9. Rangiervorrichtung nach Anspruch 8, **dadurch gekennzeichnet, dass** eine Bedienungseinrichtung (2) vorgesehen ist, durch die die Daten-Sendeeinrichtung (5) und die Ultraschall-Sendeeinrichtung (10) derart ansteuerbar sind, dass das Datensignal und das Ultraschallsignal im Wesentlichen gleichzeitig erzeugt werden.

10. Rangiervorrichtung nach einem der Ansprüche 1 bis 9, **dadurch gekennzeichnet, dass** ein Justierungs-Schaltelement (12) vorgesehen ist, zum Auslösen eines Justierungs-Vorgangs, in dem eine aktuelle Relativposition zwischen dem ersten und dem zweiten Objekt als künftige Soll-Relativposition definierbar ist durch
- Erfassen der Ist-Relativposition des ersten Objekts (1) und
- Speichern der Ist-Relativposition als Soll-Relativposition in der Speichereinrichtung.

11. Rangiervorrichtung nach Anspruch 10. **dadurch gekennzeichnet, dass** das Justierungs-Schaltelement (12) an einer Bedienungseinrichtung (2) angeordnet ist.

12. Rangiervorrichtung nach einem der Ansprüche 5 bis 11, **dadurch gekennzeichnet, dass**
- zum Erfassen der Ist-Relativposition die jeweiligen Laufzeiten der Ultraschallsignale durch die Messeinrichtung messbar sind, und
- zum Speichern der Ist-Relativposition die jeweiligen Laufzeiten und/oder entsprechenden Entfernungen als Soll-Werte in der Speichereinrichtung speicherbar sind.

13. Rangiervorrichtung nach einem der Ansprüche 5 bis 12, **dadurch gekennzeichnet, dass** ein Aktivierungs-Schaltelement (13) vorgesehen ist, durch das die Steuereinrichtung aktivierbar ist, um durch Bewegen des ersten Objekts (1) die IstWerte den Soll-Werten anzunähern.

14. Rangiervorrichtung nach Anspruch 13, **dadurch gekennzeichnet, dass** bei einem Nicht-Betätigen des Aktivierungs-Schalteleinents (13) die Steuereinrichtung ein Stoppen des Hilfs-Fahrantriebs bewirkt.

15. Rangiervorrichtung nach einem der Ansprüche 1 bis 14, **dadurch gekennzeichnet, dass** an einer Bedienungseinrichtung (2) Schaltelemente (11) vorgesehen sind, zum manuellen Ansteuern des Hilfs-Fahrantriebs (4) durch einen Bediener.

16. Rangiervorrichtung nach Anspruch 15, **dadurch gekennzeichnet, dass** die Bedienungseinrichtung die getrennt von dem Anhänger (1) tragbare Fernbedienungseinheit (2) ist.

17. Rangiervorrichtung nach einem der Ansprüche 1 bis 16, **dadurch gekennzeichnet, dass** das Datensignal ein Infrarot- oder ein Funksignal oder ein per Kabel übertragbares Datensignal ist.

18. Rangiervorrichtung nach einem der Ansprüche 1 bis 17, **dadurch gekennzeichnet, dass** über das Datensignal Steuerinformationen zum Ansteuern des Hilfs-Fahrantriebs (4) übertragbar sind.

19. Rangiervorrichtung nach einem der Ansprüche 1 bis 18, **dadurch gekennzeichnet, dass**
- an dem ersten Objekt (1) eine Daten-Sendeeinrichtung zum Senden eines Rückmeldungs-Datensignals vorgesehen ist;
- an dem zweiten Objekt (2) eine Daten-Empfangseinrichtung zum Empfangen des Rückmeldungs-Datensignals vorgesehen ist.

20. Rangiervorrichtung nach einem der Ansprüche 1 bis 19, **dadurch gekennzeichnet, dass** an dem zweiten Objekt (2) eine Anzeige vorgesehen ist, zum Anzeigen einer in dem Rückmeldungs-Datensignal enthaltenen Information.

21. Rangiervorrichtung nach einem der Ansprüche 1 bis 20, **dadurch gekennzeichnet, dass** an dem Anhänger (1) mehr als zwei Ultraschall-Empfangseinrichtungen (5, 6, 7) oder -Sendeeinrichtungen (10) derart verteilt angeordnet sind, dass von jeder Betrachtungsposition um den Anhänger (1) herum immer wenigstens zwei Ultraschall-Empfangseinrichtungen (5, 6, 7) oder - Sendeeinrichtungen (10) sichtbar sind.

22. Rangiervorrichtung nach einem der Ansprüche 1 bis 21, **dadurch gekennzeichnet, dass** durch die Steuereinrichtung ein Stillsetzen des Hilfs-Fahrantriebs bewirkt wird, wenn nur eine Ultraschall-Empfangseinrichtung (5, 6, 7) ein Ultraschallsignal empfängt.

23. Rangiervorrichtung nach einem der Ansprüche 1 bis 22, **dadurch gekennzeichnet, dass** an einer Deichselspitze (3a) des Anhängers (1) eine weitere Ultraschall-Empfangseinrichtung (7) oder -Sendeeinrichtung (10) angeordnet ist.

24. Rangiervorrichtung nach einem der Ansprüche 5 bis 23, **dadurch gekennzeichnet, dass** die Messeinrichtung nur die Ultraschallsignal-Laufzeiten weiterverarbeitet, die von den beiden zu der Ultraschall-Sendeeinrichtung (10) am nächsten positionierten Ultraschall-Empfangseinrichtungen (5, 6, 7) erfasst wurden.

25. Rangiervorrichtung nach einem der Ansprüche 1 bis 24, **dadurch gekennzeichnet, dass** in der Steuereinrichtung Steuerstrategien hinterlegt sind, um ein Bewegen des Anhängers zum Erreichen der Soll-Relativpositionen zu ermöglichen.

26. Rangiervorrichtung nach einem der Ansprüche 1 bis 25, **dadurch gekennzeichnet, dass** der Hilfs-Fahrantrieb (4) eine bezüglich einer Haupt-Fahrtrichtung des Anhängers (1) einem linken Rad (4a) des Anhängers (1) zugeordnete linke Hilfs-Fahrantriebseinheit und eine einem rechten Rad (4a) des Anhängers (1) zugeordnete rechte Hilfs-Fahrantriebseinheit aufweist.

27. Rangiervorrichtung nach Anspruch 25 oder 26, **dadurch gekennzeichnet, dass** die Steuerstrategien wenigstens eine der folgenden Steuermaßnahmen erlauben:
- Geradeausfahrt,
- Rückwärtsfahrt,
- Kurvenfahrt durch unterschiedliche Ansteuerung der linken Hilfs-Fahrantriebseinheit und der rechten Hilfs-Fahrantriebseinheit,
- Drehung um die Hochachse.
- langsame Geradeaus- oder Rückwärtsfahrt, wenn die Abweichung der Ist-Relativposition von der Soll-Relativposition unter eine vordefinierte Grenze fällt.

28. Rangiervorrichtung nach einem der Ansprüche 1 bis 27, **dadurch gekennzeichnet, dass**
- in der Steuereinrichtung eine untere und/oder eine obere Grenze für die IstWerte vorgebbar ist; und dass
- bei Unterschreiten der unteren Grenze und/oder bei Überschreiten der oberen Grenze die Steuereinrichtung ein Stillsetzen des Hilfs-Fahrantriebs (4) und/oder eine optische und/oder akustische Warnung bewirkt.

29. Rangiervorrichtung nach einem der Ansprüche 5 bis 28, **dadurch gekennzeichnet, dass**
- wenigstens einem Teil der Ultraschall-Empfangseinrichtungen (5, 6, 7) jeweils eine zusätzliche eigene Ultraschall-Sendeeinrichtung zugeordnet ist, zum Erzeugen eines Näherungs-Ultraschallsignals, das sich hinsichtlich seiner Eigenschaften von dem Ultraschallsignal der an dem einen Objekt vorgesehenen Ultraschall-Sendeeinrichtung (10) unterscheidet;
- eine Näherungseinfichtung vorgesehen ist, zum
+ Messen einer Laufzeit des von der eigenen Ultraschall-Sendeeinrichtung gesendeten, von einem Gegenstand in der Umgebung reflektierten und von der jeweiligen Ultraschall-Empfangseinrichtung (5, 6, 7) empfangenen Näherungs-Ultraschallsignals;
+ Bestimmen einer Ist-Entfernung zwischen der jeweiligen Ultraschall-Empfangseinrichtung (5, 6, 7) und dem Gegenstand;
+ Ausgeben eines Warnsignals, wenn die Ist-Entfernung einen vorgegebenen Grenzwert unterschreitet.

30. Rangiervorrichtung nach Anspruch 29, **dadurch gekennzeichnet, dass** das Warnsignal an die Steuereinrichtung führbar ist, zum Stoppen des Hilfs-Fahrantriebs (4).

31. Rangiervorrichtung nach Anspruch 29 oder 30, **dadurch gekennzeichnet, dass** das Warnsignal in Abhängigkeit von einer Änderung der Ist-Entfernung änderbar ist.

32. Rangiervorrichtung nach einem der Ansprüche 29 bis 31, **dadurch gekennzeichnet, dass** das Warnsignal grafisch und/oder akustisch darstellbar ist.

33. Rangiervorrichtung nach einem der Ansprüche 29 bis 32, **dadurch gekennzeichnet, dass**
- das Warnsignal an die Fernbedienungseinheit (2) übertragbar ist; und dass
- an der Fernbedienungseinheit (2) eine Anzeige vorgesehen ist, zum grafischen und/oder akustischen Anzeigen des Warnsignals.

34. Rangiervorrichtung nach einem der Ansprüche 29 bis 33, **dadurch gekennzeichnet, dass** eine durch Änderung der Ist-Entfernung bewirkte Änderung des Warnsignals auf der Anzeige der Fernbedienungseinheit (2) darstellbar ist.

35. Rangiervorrichtung nach einem der Ansprüche 1 bis 34, **dadurch gekennzeichnet, dass**
- die Fernbedienungseinheit (2) eine Signal-Empfangseinrichtung aufweist;
- bei Unterschreiten eines vorgegebenen Erkennungs-Grenzwerts durch die IstWerte von Ultraschallsignalen, die durch wenigstens zwei der Ultraschall-Empfangseinrichtungen empfangen worden sind, ein Erkennungs-Signal an die Signal-Empfangseinrichtung der Fernbedienungseinheit abgebbar ist;
- an der Fernbedienungseinheit eine Anzeige vorgesehen ist, zum Anzeigen eines Vorliegens des Erkennungs-Signals.

36. Rangiervorrichtung nach einem der Ansprüche 1 bis 35, **dadurch gekennzeichnet, dass** die Soll-Werte in der Speichereinrichtung dauerhaft speicherbar sind.

37. Rangiervorrichtung nach einem der Ansprüche 1 bis 36, **dadurch gekennzeichnet, dass**
- das erste Objekt ein Anhänger (1) und das zweite Objekt ein Zugfahrzeug (20) ist;
- die Daten-Empfangseinrichtung und die Ultraschall-Sendeeinrichtung (10) an dem Anhänger (1) angeordnet sind;
- die Daten-Sendeeinrichtung und wenigstens zwei der Ultraschall-Empfangseinrichtungen (5L, 5R) an dem Zugfahrzeug (20) angeordnet sind.

38. Rangiervorrichtung nach Anspruch 37, **dadurch gekennzeichnet, dass**
- an dem Zugfahrzeug (20) ein Anhängerkupplungs-Haken (21) vorgesehen ist;
- die beiden Ultraschall-Empfangseinrichtungen (5L, 5R) auf Höhe des Anhängerkupplungs-Hakens (21) und diesen zwischen sich einschließend angeordnet sind.

39. Rangiervorrichtung nach einem der Ansprüche 1 bis 38. **dadurch gekennzeichnet, dass** durch das Empfangen des Datensignals durch die Daten-Empfangseinrichtung (8) das Senden eines Ultraschallsignals durch die Ultraschall-Sendeeinrichtung (10) bewirkt wird.

40. Rangiervorrichtung nach einem der Ansprüche 1 bis 39, **dadurch gekennzeichnet, dass** wenigstens eine der Einrichtungen Daten-Sendeeinrichtung (9), Daten-Empfangseinrichtung (8), Ultraschall-Sendeeinrichtung (10) und Ultraschall-Empfangseinrichtung (5, 6, 7) lösbar, insbesondere magnetisch oder durch Saugwirkung, an dem jeweils zugeordneten Objekt (1, 2) befestigt ist.

## Claims

1. Manoeuvring device for the parking of a first object (1) in relation to a second object (2), in which the first object is a trailer (1) and the second object is a portable remote control unit (2), which is separate from the trailer, with:
- a position detection device to determine the actual relative position of the first object (1) to the second object (2);
- a memory device for storing a theoretical relative position;
- an auxiliary drive system (4) fitted to the first object (1) for parking the first object (1), and
- a control device for operating the auxiliary drive system (4) and thus moving the first object (1) in such a way that any deviation between the calculated actual position and the theoretical relative position is reduced.

2. Manoeuvring device for the parking of a first object (1) in relation to a second object (2), in which the first object is a trailer (1) and the second object is a tractor vehicle (220), with:
- a position detection device to determine the actual relative position of the first object (1) to the second object (2);
- a memory device for storing a theoretical relative position;
- an auxiliary drive system (4) fitted to the first object (1) for parking the first object (1), and
- a control device for operating the auxiliary drive system (4) and thus moving the first object (1) in such a way that any deviation between the calculated actual position and the theoretical relative position is reduced,
- whereby the theoretical relative position may be permanently stored in the memory device.

3. Manoeuvring device in accordance with Claim 1 or 2 above, **characterised in that** the actual relative position is determined by the distances between at least one reference point on one of the objects and at least two reference points on the other object.

4. Manoeuvring device in accordance with any of Claims 1 to 3 above, **characterised in that** the position detection device comprises transmitters (9, 10) and receivers (5, 6, 7, 8) for optical and/or acoustic signals for the calculation of the said distances.

5. Manoeuvring device in accordance with any of the Claims I to 4 above, **characterised**
**in that** the position detection device comprises:
- a data transmission device (9) arranged on the second object (2) for the purpose of sending a data signal;
- a data receiving device (8) arranged on the first object (1) for the purpose of receiving a data signal;
- at least one ultrasonic transmission device (10) arranged on one of the objects (1, 2) for the purpose of transmitting an ultrasonic signal;
- at least one ultrasonic receiving device (5, 6, 7) arranged on the other object (2, 1) for the purpose of receiving an ultrasonic signal, whereby
- the number of ultrasonic transmission devices (10) and of ultrasonic receiving devices (5, 6, 7) is calculated in such a way and their arrangement on the respective objects is such that at least two ultrasonic signals may be transmitted by different paths from the one object (1, 2) to the other object (2, 1), and:
- a measuring device for the respective measurement of an actual value representing the actual relative position for the duration of the ultrasonic signal from the ultrasonic signal transmission device (10) on the one object (1, 2) to the ultrasonic receiving device (5, 6, 7) on the other object (2, 1) or of a corresponding distance between the ultrasonic transmission device (10) and the ultrasonic receiving device (5, 6, 7), whereby
- the memory device is constructed in such a manner that it can store the respective theoretical values for ultrasonic signal durations or corresponding distances between the ultrasonic transmission device (10) and the ultrasonic receiving device (5, 6, 7) representing the theoretical relative position, and whereby
- the control device is constructed in such a manner that it can operate the auxiliary drive unit (4) and thereby the movement of the first object (1) in such a way that a deviation between the theoretical and the actual values is reduced.

6. Manoeuvring device in accordance with Claim 5 above, **characterised in that**:
- if only one ultrasonic receiving device (5) is arranged on the other object, at least two ultrasonic transmission devices (10) are arranged in an interspaced manner on the one object, and that
- the ultrasonic signals from the ultrasonic transmission devices (10) are received by the ultrasonic receiving device (5) in a time-lag manner according to a predetermined scheme.

7. Manoeuvring device in accordance with Claim 5 above, **characterised in that**:
- if only one ultrasonic transmission device (10) is arranged on the one object, at least two ultrasonic receiving devices (5, 6, 7) are arranged in an interspaced manner on other object, and that
- the ultrasonic signals from the ultrasonic transmission devices (10) are received simultaneously by the ultrasonic receiving devices (5, 6, 7).

8. Manoeuvring device in accordance with any of the Claims 5 to 7 above, **characterised**
**in that** the start of the measurement of the duration of the ultrasonic signals is initiated by the sending or the receiving of the data signal.

9. Manoeuvring device in accordance with Claim 8 above, **characterised in that** an operating device (2) is provided, through which the data transmission device (5) and the ultrasonic transmission device (10) can be controlled in such a manner that the data signal and the ultrasonic signal are effectively generated at the same time.

10. Manoeuvring device in accordance with any of the Claims 1 to 9 above, **characterised**
**in that** an adjustment switching element (12) is provided in order to initiate an adjustment procedure, in which an actual relative position between the first and the second objects can be defined as a future theoretical relative position by:
- calculating the actual relative position of the first object (1) and
- storing the actual relative position as a theoretical relative position in the memory system.

11. Manoeuvring device in accordance with Claim 10 above, **characterised in that** the adjustment switching element (12) is arranged on an operating device (2).

12. Manoeuvring device in accordance with any of Claims 5 to 11 above, **characterised in that**:
- to calculate the actual relative position, the respective durations of the ultrasonic signals can be measured by the measuring device, and
- to store the actual relative position, the respective durations and/or distances can be stored as theoretical values in the memory system.

13. Manoeuvring device in accordance with any of Claims 5 to 12 above, **characterised in that** an activation switching element (13) is provided, through which a control device is activated in order to move the first object (1) and thereby bring the actual and the theoretical values closer together.

14. Manoeuvring device in accordance with Claim 13 above, **characterised in that** if the activation switching element (13) is not activated, the control device has the effect of stopping the auxiliary drive unit.

15. Manoeuvring device in accordance with any of the Claims 1 to 14 above, **characterised in that** switching elements (11) are provided on an operating device (2) so that the auxiliary drive system (4) can be manually operated by an operator.

16. Manoeuvring device in accordance with Claim 15 above, **characterised in that** the operating device is the portable remote control unit that is separated from the trailer (1).

17. Manoeuvring device in accordance with any of the Claims 1 to 16 above, **characterised in that** a data signal is an infra-red or a radio signal or a data signal that can be transmitted via a cable.

18. Manoeuvring device in accordance with any of the Claims 1 to 17 above, **characterised in that** through the data signal control information can be transmitted via the data signal in order to control the auxiliary drive system (4).

19. Manoeuvring device in accordance with any of the Claims 1 to 18 above, **characterised in that**:
- a data transmission device is arranged on the first object (1) for the purpose of sending a return data signal;
- a data receiving device is arranged on the second object (2) for the purpose of receiving the return data signal.

20. Manoeuvring device in accordance with Claims 1 to 19 above, **characterised in that** a display unit is arranged on the second object (2) for the purpose of displaying information contained in the return data signal.

21. Manoeuvring device in accordance with any of the Claims 1 to 20 above, **characterised in that** more than two ultrasonic receiving (5, 6, 7) or transmission devices (10) are arranged on the trailer (1) in such a manner that at all times at least two ultrasonic receiving (5, 6, 7) or transmission (10) devices are visible from any observation point around the trailer (1).

22. Manoeuvring device in accordance with any of Claims 1 to 21 above, **characterised in that** the control device has the effect of bringing the auxiliary drive system to a standstill if only one ultrasonic receiving device receives an ultrasonic signal.

23. Manoeuvring device in accordance with any of Claims I to 22 above, **characterised in that** a further ultrasonic receiving (7) or transmission (10) device is arranged the end of a drawbar (3a) of the trailer (1).

24. Manoeuvring device in accordance with any of the Claims 5 to 23 above, **characterised in that** the measuring device will only further process the duration of the ultrasonic signals that are detected by the two ultrasonic receiving devices (5, 6, 7) that are closest to the ultrasonic transmission device (10).

25. Manoeuvring device in accordance with any of the Claims 1 to 24 above, **characterised in that** control strategies are stored in the control device for the purpose of moving the trailer until it reaches the theoretical relative positions.

26. Manoeuvring device in accordance with any of the Claims 1 to 25 above, **characterised in that** the auxiliary drive system (4) comprises a left hand auxiliary drive unit allocated to a left hand wheel (4a) of the trailer (1) and a right hand auxiliary drive unit allocated to a right hand wheel (4a) of the trailer (1), both seen in relation to the direction of travel of the trailer.

27. Manoeuvring device in accordance with Claim 25 or 26 above, **characterised in that** the control strategies permit at least one of the following control measures;
- Forward drive
- Reverse drive
- Cornering by means of an alternate operation of the left hand auxiliary drive unit and the right hand auxiliary drive unit
- Rotation around the vertical axis
- Reduced speed forward and reverse drive when the deviation of the actual position from the theoretical position falls below a predetermined amount.

28. Manoeuvring device in accordance with any of the Claims 1 to 27 above,
**characterised in that**:
- a lower and/or an upper limit for the actual values can be stored in the control device, and that
- if the value falls below the lower limit and/or exceeds the upper limit, the control device has the effect of bringing the auxiliary drive unit to a standstill and/or generating an optical and/or an acoustic warning.

29. Manoeuvring device in accordance with any of the Claims 5 to 28 above,
**characterised in that**:
- in each case an additional separate ultrasonic transmission device is allocated at least to one part of the ultrasonic receiving devices (5, 6, 7) for the purpose of generating an ultrasonic approach signal, that in its characteristics differs from the ultrasonic signal from an ultrasonic transmission device (10) arranged on the one object;
- an approach device is provided in order to: + measure the duration of an ultrasonic approach signal transmitted by the separate ultrasonic transmission device, which is reflected into the surroundings from an object and received by the respective ultrasonic receiving device (5, 6, 7);
+ determine an actual distance between the respective ultrasonic receiving device (5, 6, 7) and the object;
+ emit a warning signal if the actual distance falls short of a predetermined critical level.

30. Manoeuvring device in accordance with Claim 29 above, **characterised in that** the said warning signal may be relayed to the control device for the purpose of stopping the auxiliary drive system (4).

31. Manoeuvring device in accordance with Claim 29 or 30 above, **characterised in that** the warning signal may be varied in relation to a change in the actual distance.

32. Manoeuvring device in accordance with any of the Claims 29 to 31 above, **characterised in that** the said warning signal may be emitted graphically and/or acoustically.

33. Manoeuvring device in accordance with any of the Claims 29 to 32 above, **characterised in that**:
- the warning signal can be relayed to the remote control unit (2), and that
- a display unit is provided on the remote control unit (2) for the purpose of presenting graphic and/or acoustic displays.

34. Manoeuvring device in accordance with any of the Claim 29 to 33 above, **characterised in that** a change in the warning signal brought about by a change in the actual distance can be shown on the display of the remote control unit (2).

35. Manoeuvring device in accordance with any of the Claims 1 to 34 above,
**characterised in that**:
- the remote control unit (2) comprises a signal receiving device;
- if a predetermined recognition critical value is not attained by the actual values of ultrasonic signals received by at least two of the ultrasonic receiving devices, a recognition signal can be transmitted to the signal receiving device of the remote control unit;
- a display device is arranged on the remote control unit to indicate the presence of a recognition signal.

36. Manoeuvring device in accordance with any of the Claims 1 to 35 above, **characterised in that** the theoretical values may be permanently stored in the memory system.

37. Manoeuvring device in accordance with any of the Claims 1 to 36 above, **characterised in that**:
- the first object is a trailer (1) and the second object is a tractor vehicle (20);
- the data receiving device and the ultrasonic transmission device (10) are arranged on the trailer (1);
- the data transmission device and at least two of the ultrasonic receiving devices (5L, 5R) are arranged on the tractor vehicle (20).

38. Manoeuvring device in accordance with Claim 37 above, **characterised in that**:
- a trailer coupling hook (21) is provided on the tractor vehicle (20);
- the two ultrasonic receiving devices (5L, 5R) are arranged at the height of the trailer coupling hook (21) with the latter between them.

39. Manoeuvring device in accordance with any of the Claims 1 to 38 above, **characterised in that** the receipt of the data signal by the data receiving device (8) has the effect of transmitting an ultrasonic signal via the ultrasonic signal transmission device (10).

40. Manoeuvring device in accordance with any of the Claims 1 to 39 above, **characterised in that** at least one of the devices out of the data transmission device (9), the data receiving device (8), the ultrasonic transmission device (10) and the ultrasonic receiving device (5, 6, 7) is arranged on the respective object (2, 1) in such a manner that it can be detached in particular by magnetic means or by a suction effect.

## Revendications

1. Dispositif de manoeuvre pour manoeuvrer un premier objet (1) par rapport à un second objet (2), le premier objet étant une remorque (1) et le second une unité de télécommande (2) apte à être portée séparément de la remorque, avec
- un dispositif de détection de position pour détecter une position relative réelle du premier objet (1) par rapport au second objet (2) ;
- un dispositif de stockage pour stocker une position relative théorique ;
- un entraînement auxiliaire (4), prévu sur le premier objet (1), pour manoeuvrer le premier objet (1) ; et
- un dispositif de commande pour commander l'entraînement auxiliaire (4) et déplacer ainsi le premier objet (1) de manière à réduire un écart entre la position relative réelle détectée et la position relative théorique.

2. Dispositif de manoeuvre pour manoeuvrer un premier objet (1) par rapport à un second objet (2), le premier objet étant une remorque (1) et le second un véhicule tracteur (20), avec
- un dispositif de détection de position pour détecter une position relative réelle du premier objet (1) par rapport au second objet (2) ;
- un dispositif de stockage pour stocker une position relative théorique ;
- un entraînement auxiliaire (4), prévu sur le premier objet (1), pour manoeuvrer le premier objet (1) ; et
- un dispositif de commande pour commander l'entraînement auxiliaire (4) et déplacer ainsi le premier objet (1) de manière à réduire un écart entre la position relative réelle détectée et la position relative théorique ;
- la position relative théorique étant apte à être stockée durablement dans le dispositif de stockage.

3. Dispositif de manoeuvre selon la revendication 1 ou 2, **caractérisé en ce que** la position relative réelle est définie par les distances entre au moins un point de référence situé sur l'un des objets et au moins deux points de référence situés sur l'autre objet.

4. Dispositif de manoeuvre selon l'une des revendications 1 à 3, **caractérisé en ce que** le dispositif de détection de position comporte des émetteurs (9, 10) et des récepteurs (5, 6, 7, 8) pour des signaux optiques et/ou acoustiques destinés à détecter les distances.

5. Dispositif de manoeuvre selon l'une des revendications 1 à 4, **caractérisé en ce que** le dispositif de détection de position comporte :
- un dispositif émetteur de données (9), prévu sur le second objet (2), pour émettre un signal de données ;
- un dispositif récepteur de données (8), prévu sur le premier objet (1), pour recevoir le signal de données ;
- au moins un dispositif émetteur d'ultrasons (10), prévu sur l'un des objets (1, 2), pour émettre un signal d'ultrasons ;
- au moins un dispositif récepteur d'ultrasons (5, 6, 7), disposé sur l'autre objet (2, 1), pour recevoir le signal d'ultrasons ;
- le nombre de dispositifs émetteurs d'ultrasons (10) et de dispositifs récepteurs d'ultrasons (5, 6, 7) étant calculé et leur disposition sur les objets respectifs étant conçue pour qu'au moins deux signaux d'ultrasons soient aptes à être transmis sur des voies différentes d'un objet (1, 2) à l'autre objet (2, 1) ; et
- un dispositif de mesure pour mesurer une valeur réelle représentant la position relative réelle pour le temps de propagation du signal d'ultrasons du dispositif émetteur d'ultrasons (10) situé sur un objet (1, 2) jusqu'au dispositif récepteur d'ultrasons (5, 6, 7) situé sur l'autre objet (2, 1), ou représentant un éloignement correspondant entre le dispositif émetteur d'ultrasons (10) et le dispositif récepteur d'ultrasons (5, 6, 7) ;
- le dispositif de stockage est conçu pour stocker des valeurs théoriques représentant la position relative théorique pour des temps de propagation de signaux d'ultrasons, ou des éloignements correspondants entre le dispositif émetteur d'ultrasons (10) et les dispositifs récepteurs d'ultrasons (5, 6, 7) ; et
- le dispositif de commande est conçu pour commander l'entraînement auxiliaire (4) et déplacer ainsi le premier objet (1) de manière à réduire un écart entre les positions réelles et les positions théoriques.

6. Dispositif de manoeuvre selon la revendication 5,
**caractérisé en ce que**
- s'il est prévu sur l'autre objet un seul dispositif récepteur d'ultrasons (5), au moins deux dispositifs émetteurs d'ultrasons (10) sont disposés sur le premier objet, espacés l'un de l'autre dans l'espace ;
- et **en ce que** les signaux d'ultrasons des dispositifs émetteurs d'ultrasons (10) sont reçus par le dispositif récepteur d'ultrasons (5) de manière décalée dans le temps suivant un schéma prédéfini.

7. Dispositif de manoeuvre selon la revendication 5,
**caractérisé en ce que**
- s'il est prévu sur un objet un seul dispositif émetteur d'ultrasons (10), au moins deux dispositifs récepteurs d'ultrasons (5) sont disposés sur l'autre objet, espacés l'un de l'autre dans l'espace ;
- et **en ce que** le signal d'ultrasons du dispositif émetteur d'ultrasons (10) est reçu par les dispositifs récepteurs d'ultrasons (5, 6, 7) simultanément.

8. Dispositif de manoeuvre selon l'une des revendications 5 à 7, **caractérisé en ce que** le début de la mesure des temps de propagation des signaux d'ultrasons est déclenché par l'émission ou la réception du signal de données.

9. Dispositif de manoeuvre selon la revendication 8, **caractérisé en ce qu'**il est prévu un dispositif d'actionnement (2) grâce auquel le dispositif émetteur de données (5) et le dispositif émetteur d'ultrasons (10) sont aptes à être commandés de telle sorte que le signal de données et le signal d'ultrasons soient produits sensiblement en même temps.

10. Dispositif de manoeuvre selon l'une des revendications 1 à 9, **caractérisé en ce qu'**il est prévu un élément de déclenchement d'ajustement (12) pour déclencher une opération d'ajustement lors de laquelle une position relative du moment entre les premier et second objets est apte à être définie comme position relative théorique future, et par
- la détection de la position relative réelle du premier objet (1) et
- le stockage de la position relative réelle comme position relative théorique dans le dispositif de stockage.

11. Dispositif de manoeuvre selon la revendication 10, **caractérisé en ce que** l'élément de déclenchement d'ajustement (12) est disposé sur un dispositif d'actionnement (2).

12. Dispositif de manoeuvre selon l'une des revendications 5 à 11, **caractérisé en ce que**
- pour la détection de la position relative réelle, les temps de propagation respectifs des signaux d'ultrasons sont aptes à être mesurés par le dispositif de mesure, et
- pour le stockage de la position relative réelle, les temps de propagation et/ou les éloignements correspondants sont aptes à être stockés comme valeurs théoriques dans le dispositif de stockage.

13. Dispositif de manoeuvre selon l'une des revendications 5 à 12, **caractérisé en ce qu'**il est prévu un élément de déclenchement d'activation (13) grâce auquel le dispositif de commande est apte à être activé pour approcher les valeurs réelles des valeurs théoriques grâce au déplacement du premier objet (1).

14. Dispositif de manoeuvre selon la revendication 13, **caractérisé en ce qu'**en cas de non actionnement de l'élément d'activation (13), le dispositif de commande provoque un arrêt de l'entraînement auxiliaire.

15. Dispositif de manoeuvre selon l'une des revendications 1 à 14, **caractérisé en ce qu'**il est prévu sur un dispositif d'actionnement (2) des éléments de déclenchement (11) pour la commande manuelle de l'entraînement auxiliaire (4) par un utilisateur.

16. Dispositif de manoeuvre selon la revendication 15, **caractérisé en ce que** le dispositif d'actionnement est constitué par l'unité de télécommande (2) apte à être portée séparément de la remorque (1).

17. Dispositif de manoeuvre selon l'une des revendications 1 à 16, **caractérisé en ce que** le signal de données est un signal infrarouge ou un signal radio ou un signal de données apte à être transmis par câble.

18. Dispositif de manoeuvre selon l'une des revendications 1 à 17, **caractérisé en ce que** par l'intermédiaire du signal de données, des informations de commande destinées à commander l'entraînement auxiliaire (4) sont aptes à être transmises.

19. Dispositif de manoeuvre selon l'une des revendications 1 à 18, **caractérisé en ce qu'**il est prévu
- sur le premier objet (1) un dispositif émetteur de données pour émettre un signal de données de retour ;
- sur le second objet (2) un dispositif récepteur de données pour recevoir le signal de données de retour.

20. Dispositif de manoeuvre selon l'une des revendications 1 à 19, **caractérisé en ce qu'**il est prévu sur le second objet (2) un affichage pour afficher une information contenue dans le signal de données de retour.

21. Dispositif de manoeuvre selon l'une des revendications 1 à 20, **caractérisé en ce que** plus de deux dispositifs récepteurs d'ultrasons (5, 6, 7) ou émetteurs d'ultrasons (10) sont répartis sur la remorque (1) de telle sorte que de n'importe quelle position d'observation autour de la remorque (1) il y ait toujours au moins deux dispositifs récepteurs d'ultrasons (5, 6, 7) ou émetteurs d'ultrasons (10) de visibles.

22. Dispositif de manoeuvre selon l'une des revendications 1 à 21, **caractérisé en ce que** le dispositif de commande provoque un arrêt de l'entraînement auxiliaire quand un seul dispositif récepteur d'ultrasons (5, 6, 7) reçoit un signal d'ultrasons.

23. Dispositif de manoeuvre selon l'une des revendications 1 à 22, **caractérisé en ce qu'**il est prévu sur une pointe de timon (3a) de la remorque (1) un autre dispositif récepteur d'ultrasons (7) ou émetteur d'ultrasons (10).

24. Dispositif de manoeuvre selon l'une des revendications 5 à 23, **caractérisé en ce que** le dispositif de mesure ne traite que les temps de propagation de signaux d'ultrasons qui ont été détectés par les deux dispositifs récepteurs d'ultrasons (5, 6, 7) positionnés le plus près du dispositif émetteur d'ultrasons (10).

25. Dispositif de manoeuvre selon l'une des revendications 1 à 24, **caractérisé en ce que** des stratégies de commande sont déposées dans le dispositif de commande afin de permettre un déplacement de la remorque jusqu'à ce que les positions relatives théoriques soient atteintes.

26. Dispositif de manoeuvre selon l'une des revendications 1 à 25, **caractérisé en ce que** l'entraînement auxiliaire (4) comporte une unité de commande auxiliaire gauche qui est associée à une roue (4a) gauche de la remorque (1), par rapport à un sens de circulation principal de ladite remorque (1), et une unité d'entraînement auxiliaire droite qui est associée à une roue (4a) droite de la remorque (1).

27. Dispositif de manoeuvre selon la revendication 25 ou 26, **caractérisé en ce que** les stratégies de commande permettent l'une au moins des mesures de commande suivantes :
- déplacement tout droit,
- marche arrière,
- déplacement sur une courbe grâce à des commandes différentes des unités de commande auxiliaire gauche et droite,
- rotation autour de l'axe vertical,
- déplacement lent tout droit ou en marche arrière si l'écart entre la position relative réelle et la position relative théorique devient inférieur à une limite prédéfinie.

28. Dispositif de manoeuvre selon l'une des revendications 1 à 27, **caractérisé en ce que**
- dans le dispositif de commande une limite inférieure et/ou une limite supérieure pour les valeurs réelles sont aptes à être prédéfinies ; et **en ce que**
- au-dessous de la limite inférieure et/ou au-dessus de la limite supérieure, le dispositif de commande provoque un arrêt de l'entraînement auxiliaire (4) et/ou un avertissement optique et/ou acoustique.

29. Dispositif de manoeuvre selon l'une des revendications 5 à 28, **caractérisé en ce que**
- un dispositif émetteur d'ultrasons individuel supplémentaire est associé à une partie au moins des dispositifs récepteurs d'ultrasons (5, 6, 7), pour produire un signal d'ultrasons de proximité dont les caractéristiques sont différentes de celles du signal d'ultrasons du dispositif émetteur d'ultrasons (10) prévu sur un objet ;
- il est prévu un dispositif d'approximation pour
+ mesurer un temps de propagation du signal d'ultrasons d'approximation émis par le dispositif émetteur d'ultrasons individuel, réfléchi par un objet dans l'environnement et reçu par le dispositif récepteur d'ultrasons correspondant (5, 6, 7) ;
+ définir un éloignement réel entre le dispositif récepteur d'ultrasons correspondant (5, 6, 7) et l'objet ;
+ émettre un signal d'avertissement si l'éloignement réel devient inférieur à une valeur limite prédéfinie.

30. Dispositif de manoeuvre selon la revendication 29, **caractérisé en ce que** le signal d'avertissement est apte à être transmis au dispositif de commande afin d'arrêter l'entraînement auxiliaire (4).

31. Dispositif de manoeuvre selon la revendication 29 ou 30, **caractérisé en ce que** le signal d'avertissement est variable en fonction d'une variation de l'éloignement réel.

32. Dispositif de manoeuvre selon l'une des revendications 29 à 31, **caractérisé en ce que** le signal d'avertissement est apte à être représenté sous forme graphique et/ou acoustique.

33. Dispositif de manoeuvre selon l'une des revendications 29 à 32, **caractérisé en ce que**
- le signal d'avertissement est apte à être transmis à l'unité de télécommande (2) ;
- et **en ce qu'**il est prévu sur l'unité de télécommande (2) un affichage pour la présentation graphique et/ou acoustique du signal d'avertissement.

34. Dispositif de manoeuvre selon l'une des revendications 29 à 33, **caractérisé en ce qu'**une variation du signal d'avertissement provoquée par une variation de l'éloignement réel est apte à être représentée sur l'affichage de l'unité de télécommande (2).

35. Dispositif de manoeuvre selon l'une des revendications 1 à 34, **caractérisé en ce que**
- l'unité de télécommande (2) comporte un dispositif récepteur de signaux ;
- si les valeurs réelles de signaux d'ultrasons qui ont été reçus par au moins deux des dispositifs récepteurs d'ultrasons deviennent inférieures à une valeur limite de détection prédéfinie, un signal de détection est apte à être émis en direction du dispositif récepteur de signaux de l'unité de télécommande ;
- il est prévu sur l'unité de télécommande un affichage pour afficher la présence du signal de détection.

36. Dispositif de manoeuvre selon l'une des revendications 1 à 35, **caractérisé en ce que** les valeurs théoriques sont aptes à être stockées durablement dans le dispositif de stockage.

37. Dispositif de manoeuvre selon l'une des revendications 1 à 36, **caractérisé en ce que**
- le premier objet est une remorque (1), et le second un véhicule tracteur (20) ;
- le dispositif récepteur de données et le dispositif émetteur d'ultrasons (10) sont disposés sur la remorque (1) ;
- le dispositif émetteur de données et au moins deux des dispositifs récepteurs d'ultrasons (5L, 5R) sont disposés sur le véhicule tracteur (20).

38. Dispositif de manoeuvre selon la revendication 37, **caractérisé en ce que**
- un crochet d'attelage de remorque (21) est prévu sur le véhicule tracteur (20) ;
- les deux dispositifs récepteurs d'ultrasons (5L, 5R) sont disposés à la hauteur du crochet d'attelage de remorque (21) et sont disposés de manière à entourer ledit crochet (21).

39. Dispositif de manoeuvre selon l'une des revendications 1 à 38, **caractérisé en ce que** la réception du signal de données par le dispositif récepteur de données (8) provoque l'émission d'un signal d'ultrasons par le dispositif émetteur d'ultrasons (10).

40. Dispositif de manoeuvre selon l'une des revendications 1 à 39, **caractérisé en ce que** parmi le dispositif émetteur de données (9), le dispositif récepteur de données (8), le dispositif émetteur d'ultrasons (10) et le dispositif récepteur d'ultrasons (5, 6, 7), l'un au moins est fixé de manière amovible, en particulier de manière magnétique ou par aspiration, à l'objet (1, 2) associé.
